# EUROPÄISCHE PATENTSCHRIFT

(11) **EP 4 077 184 B1**
(45) Veröffentlichungstag und Bekanntmachung des Hinweises auf die Patenterteilung: **01.05.2024**
(21) Anmeldenummer: 20825139.7
(22) Anmeldetag: 10.12.2020
(51) Int. Cl.: B65H 75/36, B66C 13/12, H02G 11/00, B66C 13/14, B66C 23/00, B66C 23/70, H02G 11/02

(54) **ENERGIEFÜHRUNG**
ENERGY SUPPLY SYSTEM
SYSTÈME D'ALIMENTATION EN ÉNERGIE

(30) Priorität: 17.12.2019 AT 5023119 U
(43) Veröffentlichungstag der Anmeldung: 26.10.2022
(73) Patentinhaber: Palfinger AG, 5101 Bergheim (AT)
(72) Erfinder: RÖCK, Christoph, 5630 Bad Hofgastein (AT)
(74) Vertreter: Torggler & Hofmann Patentanwälte - Innsbruck
(86) Internationale Anmeldenummer: PCT/AT2020/060445
(87) Internationale Veröffentlichungsnummer: WO 2021/119686

(56) Entgegenhaltungen:
- EP-A1- 2 610 208
- WO-A1-2018/072941

## Beschreibung

Die vorliegende Erfindung betrifft Energiezuführsystem gemäß dem Oberbegriff des Anspruchs 1.

Ein gattungsgemäßes Energiezuführsystem ist beispielsweise aus der EP 2 610 208 A1 bekannt. In einer in den Figuren 12 bis 15 gezeigten Variante wird der Träger in einer Führungsvorrichtung geführt auf eine Wickelvorrichtung aufgewickelt oder von dieser abgewickelt. Die Führungsvorrichtung weist Transportscheiben mit mehreren stufig angeordneten, konzentrischen Bahnen auf. Der Träger weist Abschnitte mit unterschiedlichen Breiten auf, welche gemäß der Breite auf die stufigen Bahnen aufgewickelt oder von den stufigen Bahnen abgewickelt werden können, wobei die Aufwicklung von der innersten Bahn zur äußersten Bahn erfolgt. Ein Spurwechsel zwischen den Bahnen erfolgt durch die Bahnen verbindende Kulissen und die wechselnde Breite des Trägers.

Ein solches Energiezuführsystem weist jedoch einige Nachteile auf. So ist etwa der Träger sehr aufwändig gestaltet. Wickelvorrichtungen mit unterschiedlicher Aufnahmekapazität benötigen jeweils eigens konfektionierte Träger. Weiter variiert die Höhe der Wicklung am Ausgang der Wickelvorrichtung jeweils um die Wickellage.

Die WO 2018/072941 A1 zeigt eine Schnelllauf-Hubvorrichtung für einen langgestreckten, flexiblen Körper für eine Versorgungsleitung mit einer Führung mit spiralförmigen Bahnen, wobei ein Teilabschnitt des flexiblen Körpers endseitig mit einer Drehdurchführung für die mindestens eine Versorgungsleitung verbunden ist und offenbart ein Energiezuführsystem gemäß dem Oberbegriff des Anspruchs 1.

Aufgabe der Erfindung ist es, ein verbessertes Energiezuführsystem anzugeben, für welches die zuvor diskutierten Nachteile nicht auftreten.

Diese Aufgabe wird durch ein Energiezuführsystem den Merkmalen des Anspruchs 1 gelöst. Vorteilhafte Ausführungsformen der Erfindung sind in den abhängigen Ansprüchen definiert.

Das Energiezuführsystem weist einen Leitungsspeicher zum Auf- und Abwinden zumindest einer Energieleitung um ein Windungszentrum des Leitungsspeichers auf.

Der Leitungsspeicher kann zur platzsparenden und geordneten Lagerung eines nicht aus dem Leitungsspeicher entnommenen Teils der Energieleitung dienen.

Als ein Windungszentrum kann ein im Wesentlichen zentral im Leitungsspeicher gelegener Punkt verstanden werden, von welchem ausgehend (oder auf welchen zulaufend) die zumindest eine Energieleitung in einer oder mehreren Windungen verlaufend im Leitungsspeicher aufgewunden werden kann. Ein solcher Verlauf kann beispielsweise ähnlich einer ebenen Spirale oder Schneckenlinie erfolgen.

Für das Energiezuführsystem kann allgemein vorgesehen sein, dass die zumindest eine Energieleitung im Windungszentrum, beispielsweise durch eine geeignete Durchführung, in den Leitungsspeicher einmündet. Es kann also vorgesehen sein, dass die Energieleitung im Windungszentrum in den Leitungsspeicher einmündet, von dort in abschnittsweise geführten Windungen zur Öffnung verläuft und durch diese aus dem Leitungsspeicher austritt.

Das Energiezuführsystem kann für ein an einem Hebezeug befestigbares oder befestigtes Arbeitsgerät vorgesehen sein.

Das Energiezuführsystem kann allgemein eine Relativbewegung des Arbeitsgeräts (oder allgemein eines freien Endes der Energieleitung) zum Leitungsspeicher erlauben. Das Arbeitsgerät kann während der Bewegung mit der Energieleitung verbunden bleiben. Durch ein Auf- und Abwinden der zumindest einen Energieleitung in den oder aus dem Leitungsspeicher kann die Länge des aus dem Leitungsspeicher entnommenen Abschnitts der Energieleitung an die Relativbewegung zwischen Arbeitsgerät und Leitungsspeicher angepasst werden.

Die zumindest eine Energieleitung kann zumindest eine hydraulische und/oder zumindest eine elektrische Versorgungsleitung umfassen.

Für das Energiezuführsystem ist zumindest ein Träger für die wenigstens eine energieführende Leitung vorgesehen. Die Energieleitung kann im Träger angeordnet sein (in anderen Worten kann der Träger die Energieleitung umschließen), sodass ein Auf- und Abwinden der Energieleitung im Leitungsspeicher durch einen Auf- und Abwinden des Trägers erfolgt. Es ist denkbar, dass der Träger von einer Hülle der Leitung oder Leitungen ausgebildet ist.

Der Leitungsspeicher weist eine Öffnung zum Ein- und Austritt des Trägers und der Energieleitung auf. Ein Abschnitt des Trägers kann somit durch die Öffnung in den Leitungsspeicher eingebracht werden oder durch die Öffnung aus diesem zum Teil entnommen werden.

Der Träger (und damit die Energieleitung) des erfindungsgemäßen Energiezuführsystems ist zur abschnittsweisen Führung des Trägers im Leitungsspeicher mit Führungsmitteln über Führungsstrecken und Führungsbögen zum Windungszentrum des Leitungsspeichers führbar.

Der Träger kann allgemein einen Abschnitt mit Führungsmitteln und einen Abschnitt ohne Führungsmittel aufweisen.

Dabei ist eine erste Führungsstrecke und ein daran anschließender erster Führungsbogen, und eine an den ersten Führungsbogen anschließende zweite Führungsstrecke und ein daran anschließender zweiter Führungsbogen, und weiter eine an den zweiten Führungsbogen anschließende und im Vergleich zur ersten Führungsstrecke relativ zum Windungszentrum weiter innen liegende dritte Führungsstrecke vorgesehen.

Die erste Führungsstrecke und die zweite Führungsstrecke können im Wesentlichen den gleichen Abstand (beispielsweise als Normalabstand gemessen) zum Windungszentrum aufweisen.

Der erste Führungsbogen und der zweite Führungsbogen können im Wesentlichen den gleichen Abstand (beispielsweise als Normalabstand des Krümmungsmittelpunkts gemessen) zum Windungszentrum aufweisen.

Die erste Führungsstrecke und die zweite Führungsstrecke können relativ zum Windungszentrum einander gegenüberliegend angeordnet sein.

Der erste Führungsbogen und der zweite Führungsbogen können relativ zum Windungszentrum einander gegenüberliegend angeordnet sein.

Gegebenenfalls können weitere Führungsbögen und Führungsstrecken vorgesehen sein. So kann beispielsweise ein an die dritte Führungsstrecke anschließender, im Vergleich zum ersten Führungsbogen relativ zum Windungszentrum weiter innen liegende dritter Führungsbogen vorgesehen sein, an welchen eine im Vergleich zur zweiten Führungsstrecke relativ zum Windungszentrum weiter innen liegende vierte Führungsstrecke anschließt. Es soll nicht ausgeschlossen sein, dass darüber hinaus noch weitere Führungsbögen und Führungsstrecken vorgesehen sind.

Die Führungsstrecken und Führungsbögen können eine Führungsbahn ausbilden, wobei die Führungsbahn von der Öffnung zum Windungszentrum hin einen im Wesentlichen spiralförmig gewundenen, sich in Richtung des Windungszentrums verengenden (also im Wesentlichen mit abnehmendem Krümmungsradius) Verlauf aufweisen kann.

Durch eine solche Anordnung von Führungsstrecken und Führungsbögen kann erreicht werden, dass diese von der Öffnung zum Windungszentrum hin einen im Wesentlichen spiralförmigen Verlauf aufweisen und der zumindest eine Träger abschnittsweise im Wesentlichen spiralförmig im Leitungsspeicher zum Windungszentrum hin auf- und abwindbar ist.

In anderen Worten kann eine solche Anordnung von Führungsstrecken und Führungsbögen ausgehend von der Öffnung des Leitungsspeichers zum Windungszentrum des Leitungsspeichers hin einen im Wesentlichen enger werdenden (enger gewundenen), spiralförmigen Verlauf aufweisen.

Dadurch kann eine abschnittsweise im Wesentlichen spiralförmige, mehrlagige und gleichsinnige (mit gleichem Windungssinn) Auf- und Abwindung des Trägers (und damit der Energieleitung) im Leitungsspeicher erreicht werden.

Durch die Führungsbögen und Führungsstrecken und die korrespondierenden Führungsmittel kann der Leitungsspeicher selbst im Wesentlichen ohne bewegbare Teile ausgebildet werden.

Durch die Führungsbögen und Führungsstrecken und die korrespondierenden Führungsmittel können die auftretenden Kräfte besser verteilt werden. Dadurch kann der Verschleiß minimiert werden.

Durch die Führungsbögen und Führungsstrecken und die korrespondierenden Führungsmittel kann eine Gleitbewegung des Trägers relativ zu den Führungsbögen und Führungsstrecken zugelassen werden.

Ein Anschluss einer Führungsstrecke an einen Führungsbogen (oder umgekehrt) muss nicht direkt, ununterbrochen oder unmittelbar erfolgen. Bei einer beispielhaften Ausführung der Führungsstrecken und Führungsbögen in Form von Stegen oder Ausnehmungen kann etwa zwischen einem Führungsbogen und einer darauffolgenden Führungsstrecke eine gewisse Lücke oder Unterbrechung bestehen. Eine solche Lücke oder Unterbrechung ist jedoch so zu bemessen, dass eine Führung des Trägers mit dessen Führungsmitteln gewährleistet ist.

Es ist vorgesehen, dass die dritte Führungsstrecke im Vergleich zur ersten Führungsstrecke relativ zum Windungszentrum weiter innen liegende angeordnet ist. Die erste Führungsstrecke und die dritte Führungsstrecke können beispielsweise relativ zum Windungszentrum einander gegenüberliegend angeordnet sein, wobei die dritte Führungsstrecke näher am Windungszentrum gelegen ist.

Die Führungsstrecken und auch die Führungsbögen, insbesondere die erste und die dritte Führungsstrecke, können derart angeordnet und beabstandet sein, dass sich ein darauf aufgewundener Träger zwischen benachbarten Führungsstrecken oder Führungsbögen nicht selbst berührt. Dies kann zu einer Verminderung der auftretenden Reibungskräfte führen.

Durch die Führungsbögen und Führungsstrecken und die korrespondierenden Führungsmittel kann der Träger abschnittsweise im Leitungsspeicher einer Zwangsführung unterliegen.

Durch die Führungsbögen und Führungsstrecken und die korrespondierenden Führungsmittel kann der Träger abschnittsweise im Leitungsspeicher schubfest geführt werden. Bei einer auf den Träger ausgeübten Zug- oder Schubkraft in Richtung des Trägers kann dieser entlang den Führungsbögen und Führungsstrecken bewegt werden. Die Führungsbögen und Führungsstrecken und die korrespondierenden Führungsmittel können dabei derart ineinander eingreifen, dass nur eine Bewegung des Trägers entlang der Führungsbögen und Führungsstrecken möglich ist. Dadurch kann ein Ausknicken und somit ungeordnetes Auf- und Abwinden verhindert werden.

Für den Träger kann vorgesehen sein, dass dieser in Form zumindest einer Hülle der Energieleitung oder in Form zumindest einer Kette mit gelenkig miteinander verbundenen Kettengliedern ausgebildet ist. Solche Ketten sind im Stand der Technik als Energieketten oder auch als Energieführungsketten bekannt. Die zumindest eine Energieleitung kann in einem Innenbereich der Kette angeordnet werden.

Der Träger kann in zumindest eine Richtung im Wesentlichen frei verbiegbar oder windbar sein.

In einer Ausführung des Trägers als eine Hülle der Energieleitung kann der Träger zwar eine gewisse Quersteifigkeit aufweisen, kann sich aber bis auf einen gewissen minimalen Biegeradius verbiegen und somit aufwinden lassen.

In einer Ausführung des Trägers als eine Kette kann der Träger in zumindest eine Richtung (beispielweise zumindest im Windungssinn) im Wesentlichen bis auf einen gewissen minimalen Biegeradius frei verbiegbar oder windbar sein.

Eine Verbiegung oder Windung in bestimmte Richtungen kann durch eine Selbsthemmung der Kette unterdrückt werden.

In einer Ausführung der Erfindung kann vorgesehen sein, dass die Führungsmittel des Trägers als von zumindest einem Teil des Trägers, insbesondere von der Hülle oder einem Teil der Kettenglieder, abstehende, axiale Vorsprünge ausgebildet sind.

Als axial abstehend kann allgemein ein Hervorragen quer zur Längserstreckung des Trägers verstanden werden. Die axialen Vorsprünge können zur Reibungsverminderung mit Rollen oder reibungsmidernden Beschichtungen versehen sein. Die Vorsprünge können eine zylindrische oder stegförmige Form aufweisen.

Der Leitungsspeicher kann zumindest eine flächige Trägerplatte aufweisen und die Führungsbögen und Führungsstrecken können in Form einer mit den Führungsmittel des Trägers korrespondierenden Führungsbahn in der Trägerplatte ausgebildet sein. Die Führungsbahn kann in Form einer Stufe, einer Nut oder einer Ausnehmung in der Trägerplatte ausgebildet sein. Die Führungsbahn kann durchgängig oder abschnittsweise, also als Aneinanderreihung einzelner Abschnitte, ausgebildet sein.

In einer Ausführung der Erfindung ist es denkbar, dass die Führungsbahn als eine einzelne durchgängige Nut oder Ausnehmung in der zumindest einen Trägerplatte des Leitungsspeichers ausgebildet ist.

In einer weiteren Ausführung der Erfindung kann vorgesehen sein, dass die Führungsmittel des Trägers als Führungsbahn in Form einer Vielzahl von einzelnen Führungsbahnen in zumindest einem Teil der Hülle oder zumindest einem Teil der Kettenglieder ausgebildet sind. Die einzelnen Führungsbahnen können beispielsweise als Nuten oder Ausnehmungen im Träger ausgebildet sein.

Die Führungsbögen und Führungsstrecken können in Form einer Anordnung oder Abfolge aus von der Trägerplatte abstehenden Vorsprüngen ausgebildet sein.

Als von der Trägerplatte abstehend kann allgemein ein Hervorragen aus der Ebene der Trägerplatte verstanden werden. Die Vorsprünge können zur Reibungsverminderung mit Rollen oder reibungsmidernden Beschichtungen versehen sein. Die Vorsprünge können eine zylindrische oder stegförmige Form aufweisen.

Für das Energiezuführsystem ist vorgesehen, dass
- der Träger ein äußeres, erstes Ende und ein inneres, zweites Ende aufweist und
- der Träger einen Abschnitt mit Führungsmitteln und einen Abschnitt ohne Führungsmittel aufweist, wobei sich der Abschnitt ohne Führungsmittel vom zweiten Ende bis zum Abschnitt mit Führungsmitteln erstreckt und
- der Träger am zweiten Ende des Trägers mit dem Windungszentrum verbunden ist und der Abschnitt ohne Führungsmittel im Leitungsspeicher ungeführt ist.

In anderen Worten kann vorgesehen sein, dass der Träger im Leitungsspeicher einen geführten Abschnitt und einen ungeführten Abschnitt aufweist. Der geführte Abschnitt kann sich im Wesentlichen von der Öffnung des Leitungsspeichers über die Führungsstrecken und Führungsbögen bis zum Ende des Abschnitts des Trägers mit Führungsmitteln bzw. bis zum Anfang des Abschnitts des Trägers ohne Führungsmittel erstrecken. Der ungeführte Abschnitt kann sich von dort zum Windungszentrum erstreckt.

Der Träger kann auch außerhalb des Leitungsspeichers Führungsmittel aufweisen.

Das erste Ende des Trägers kann an dem aus dem Leitungsspeicher entnommenen Abschnitt des Trägers angeordnet sein.

Als ungeführter Abschnitt kann allgemein ein Abschnitt des Trägers verstanden werden, der nicht durch Führungsbögen oder Führungsstrecken und entsprechende Führungsmittel geführt ist. Ein solcher ungeführter Abschnitt kann ähnlich einer Schleppkette ausgebildet sein.

Es ist vorgesehen, dass der ungeführte Abschnitt des Trägers im Wesentlichen spiralförmig um das Windungszentrum windbar ist und sich der Windungsradius des ungeführten Abschnitts des Trägers beim Auf- und Abwinden des geführten Teils des Abschnitt mit Führungsmitteln des Trägers vergrößert oder verringert. Eine Vergrößerung oder Verringerung des Windungsradius des ungeführten Abschnitts kann bei einem Übergang zu einer losen oder engen Windung vorliegen.

Dabei ist vorgesehen, dass die Energieleitung im Windungszentrum durch eine drehfeste Durchführung in den Leitungsspeicher einmündet. Die sich bei einem Auf- und Abwinden des geführten Teils des Abschnitts mit Führungsmitteln des Trägers ergebende Verwindung des ungeführten Abschnitts mit einem im Windungszentrum drehfest gehaltenem zweiten Ende, für welche in anderen nicht erfindungsgemäßen Ausführungen eine technisch aufwändige Drehdurchführung vorgesehen ist, kann durch eine im Wesentlichen spiralförmige Windung um das Windungszentrum und einen sich vergrößernden oder verringernden Windungsradius zugelassen werden. Der vom Auf- oder Abwinden des ungeführten Abschnitts beanspruchte oder freiwerdende Platz im Leitungsspeicher kann durch ein Aus- oder Eintreten des geführten Teils des Trägers aus dem oder in den Leitungsspeicher zur Verfügung gestellt oder aufgefüllt werden.

In einer nicht erfindungsgemäßen Ausführung kann vorgesehen sein, dass für die Energieleitung im Windungszentrum eine Drehdurchführung vorgesehen ist. Die sich bei einem Auf- und Abwinden des geführten Abschnitts des Trägers ergebende Verwindung des ungeführten Abschnitts kann durch eine Verbindung des zweiten Endes des Trägers mit der Drehdurchführung zugelassen oder verhindert werden.

Als weitere Alternative, aber auch in Kombination mit der zuvor beschriebenen im Wesentlichen spiralförmig erfolgenden Windung, kann vorgesehen sein, dass der ungeführte Abschnitt des Trägers beim Auf- und Abwinden des geführten Abschnitts des Trägers in gegenläufigen Lagen um das Windungszentrum auf- und abwindbar ist. Die Bewegung des ungeführten Abschnitts des Trägers kann dabei einer zweilagig zusammengelegten Schleppkette, welche in einer gleitenden Anordnung um das Windungszentrum windbar ist, gleichen.

Bei einer Windung des ungeführten Abschnitts des Trägers um das Windungszentrum kann allgemein vorgesehen sein, dass sich der ungeführte Abschnitt am an den Führungsstrecken und Führungsbögen geführten Abschnitt des Trägers abstützt und an diesem entlanggleitet. Insbesondere kann dies bei einem sich vergrößernden Windungsradius (Übergang zu einer losen Windung) des ungeführten Abschnitts des Trägers beim Aufwinden des geführten Abschnitts vorliegen.

Für das Energiezuführsystem kann allgemein vorgesehen sein, dass der Abstand der Führungsbögen zueinander im Wesentlichen unveränderlich ist.

Das Auf- und Abwinden des Trägers (und somit der Energieleitung) im oder aus dem Leitungsspeicher kann entlang einer von den Führungsstrecken und Führungsbögen ausgebildeten, fest vorgebbaren oder vorgegebenen Führungsbahn erfolgen.

Für das Energiezuführsystem kann allgemein vorgesehen sein, dass
- die Führungsbögen im Wesentlichen einen Windungswinkel von 180 Grad aufweisen und/oder
- die Führungsbögen gleiche und/oder unterschiedliche Krümmungsradien aufweisen, wobei die Führungsbögen mit unterschiedlichen Krümmungsradien von der Öffnung des Leitungsspeichers zum Windungszentrum hin einen abnehmenden Krümmungsradius aufweisen, und/oder
- der jeweilige Krümmungsradius eines Führungsbogens konstant ist.

Die Führungsbögen können jeweils halbkreisförmig ausgebildet sein.

Gruppen von Führungsbögen mit unterschiedlichen Krümmungsradien, welche von der Öffnung des Leitungsspeichers zum Windungszentrum hin einen abnehmenden Krümmungsradius aufweisen, können konzentrisch angeordnet sein. Die Gruppierung kann beispielsweise auf gegenüberliegenden Seiten relativ zum Windungszentrum erfolgen.

Für das Energiezuführsystem kann allgemein vorgesehen sein, dass die jeweiligen Führungsstrecken einen im Wesentlichen geradlinigen Verlauf und/oder im Wesentlichen die gleiche Längserstreckung aufweisen.

Für das Energiezuführsystem kann allgemein vorgesehen sein, dass der Leitungsspeicher im Wesentlichen eine längliche Form mit einer größeren Längserstreckung als Quererstreckung aufweist und die Führungsstrecken im Wesentlichen entlang der Längserstreckung des Leitungsspeichers verlaufen.

Durch eine längliche Form des Leitungsspeichers kann die Länge der im oder aus dem Leitungsspeicher auf- und abwindbaren Energieleitung optimiert werden.

Der Leitungsspeicher kann beispielsweise eine im Wesentlichen rechteckige Form aufweisen, wobei die Führungsbögen an den kurzen Seiten des Rechtecks angeordnet sind und die Führungsstrecken entlang der langen Seiten des Rechtecks angeordnet sind.

Für das Energiezuführsystem kann allgemein vorgesehen sein, dass das Auf- und Abwinden des zumindest einen Trägers im Wesentlichen in einer Ebene erfolgt. Dadurch kann ein kreuzungsfreies Winden des Trägers ermöglicht werden.

Für das Energiezuführsystem kann allgemein vorgesehen sein, dass der Ein- und Austritt des zumindest einen Trägers durch die Öffnung an einer festen Position des Leitungsspeichers erfolgt. Dies kann dadurch erreicht werden, dass die erste Führungsstrecke an die Öffnung anschließt.

Bei im Stand der Technik bekannten Energiezuführsystemen ändert sich die Position des Ein- und Austritts in den oder aus dem Leitungsspeicher mit der Länge des im Leitungsspeicher auf- oder abgewundenen Trägers. Im Gegensatz dazu kann für das erfindungsgemäße Energiezuführsystem vorgesehen sein, dass dies an einer festen Position des Leitungsspeichers erfolgt, wodurch sich der Verlauf des aus dem Leitungsspeicher entnommenen Trägers besser vorhersagen lässt.

Für das Energiezuführsystem kann allgemein vorgesehen sein, dass der zumindest eine Träger eine im Wesentlichen gleichbleibende Quererstreckung aufweist. Dadurch kann eine einfache Anpassung des Trägers an die im Leitungsspeicher aufwindbare Länge erfolgen.

Für das Energiezuführsystem kann ein auf den zumindest einen Träger wirkender Antrieb zum Auf- und Abwinden des zumindest einen Trägers vorgesehen sein. Der Antrieb kann in Form einer (oder mehrerer) angetriebenen Walze oder eines angetriebenen Zahnrads vorliegen. Der Antrieb kann einen Kraftspeicher, in Form etwa einer Feder, oder einen Motor aufweisen.

Für das Energiezuführsystem kann allgemein vorgesehen sein, dass die Position des Windungszentrums im Leitungsspeicher verstellbar ist. Das Windungszentrum kann beispielsweise im Leitungsspeicher linear verfahrbar angeordnet sein. Dafür kann vorzugsweise ein Antrieb vorliegen. Vorzugsweise kann die Position des Windungszentrums im Leitungsspeicher linear in Richtung der und/oder quer zu den Führungsstrecken verfahrbar ausgebildet sein.

Durch eine Verstellbarkeit der Position des Windungszentrums im Leitungsspeicher kann sich die Länge des ungeführten Abschnitts des Trägers reduzieren lassen.

Schutz wird auch für Hebezeug, insbesondere einen Kran, mit einem wie zuvor beschriebenen Energiezuführsystem begehrt.

Das Hebezeug kann ein Arbeitsgerät aufweisen, wobei das Energiezuführsystem eine Relativbewegung des Arbeitsgeräts zum Leitungsspeicher erlauben kann. Das Arbeitsgerät kann während der Bewegung mit der Energieleitung verbunden bleiben und die Länge des aus dem Leitungsspeicher entnommenen Abschnitts der Energieleitung kann an die Relativbewegung zwischen Arbeitsgerät und Leitungsspeicher angepasst werden.

Bei einem solchen Hebezeug kann das Energiezuführsystem an einem Ausleger, beispielsweise einem Arm eines Armssystems, des Hebezeugs befestigt sein.

Vorteilhaft kann das Energiezuführsystem an einem innenliegenden Ausleger, beispielsweise dem Anfang eines teleskopierbaren Armsystems, angeordnet sein, und ein vom Energiezuführsystem versorgtes Arbeitsgerät an einem dazu bewegbaren, außenliegenden Ausleger, beispielsweise am Ende eines Teleskopauslegers eines teleskopierbaren Armsystems, angeordnet sein.

Bei einem Aus- und Einfahren des teleskopierbaren Armsystems kann die Länge des aus dem Leitungsspeicher entnommenen Abschnitts des Trägers und somit der Energieleitung an die Relativbewegung zwischen Arbeitsgerät und Leitungsspeicher angepasst werden.

Andere Anwendungen des erfindungsgemäßen Energiespeichers, wie etwa für CNC-Bearbeitungszentren, Industrieroboter, oder allgemeine bewegliche Maschinenteile, sind ebenso denkbar.

Ausführungsbeispiele der Erfindung werden anhand der Figuren diskutiert. Darin zeigen:
- Fig. 1: ein an einem Ausleger angeordnetes Energiesystem in einer ersten Ausführung,
- Fig. 2: einen Energiespeicher gemäß einer zweiten Ausführung in Isolation,
- Fig. 3: Energiespeicher gemäß der ersten Ausführung in Isolation,
- Fig. 4: eine weitere Ansicht eines Energiespeichers gemäß der ersten Ausführung in Isolation,
- Fig. 5a bis 5j: Schnittdarstellungen eines Ab- oder Aufwindvorgangs des Trägers aus dem oder in den Leitungsspeicher eines Energiespeichers gemäß der ersten Ausführung,
- Fig. 6: einen Querschnitt durch einen Energiespeicher gemäß der ersten Ausführung,
- Fig. 7a, 7b, 7c: schematische Darstellungen zu unterschiedlichen Ausführungen des Trägers und der Führung des Trägers,
- Fig. 8: eine nicht erfindungsgemäße Ausführung des Energiespeichers mit einer Drehdurchführung,
- Fig. 9: eine Ausführung des Energiespeichers mit einer mehrlagigen, gegenläufigen Windung des ungeführten Teils des Trägers,
- Fig. 10a und 10b: Ausführungen des Energiespeichers mit beweglichen Windungszentren,
- Fig. 11a und 11b: eine Ausführung eines Energiespeichers mit einem Antrieb, und
- Fig. 12a bis 12d: Ansichten zu einem Hebezeug mit einer Energieführung.

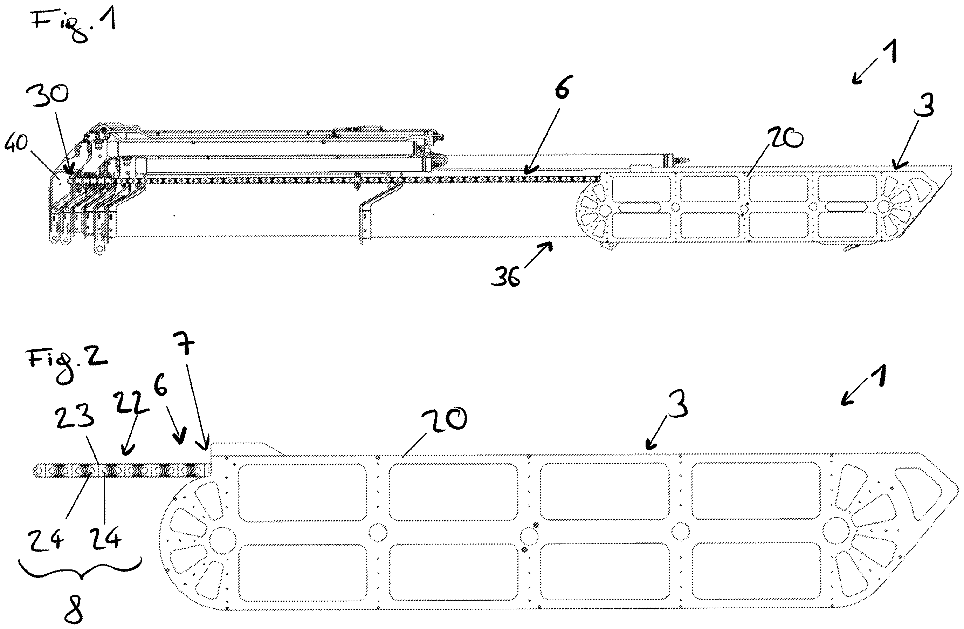

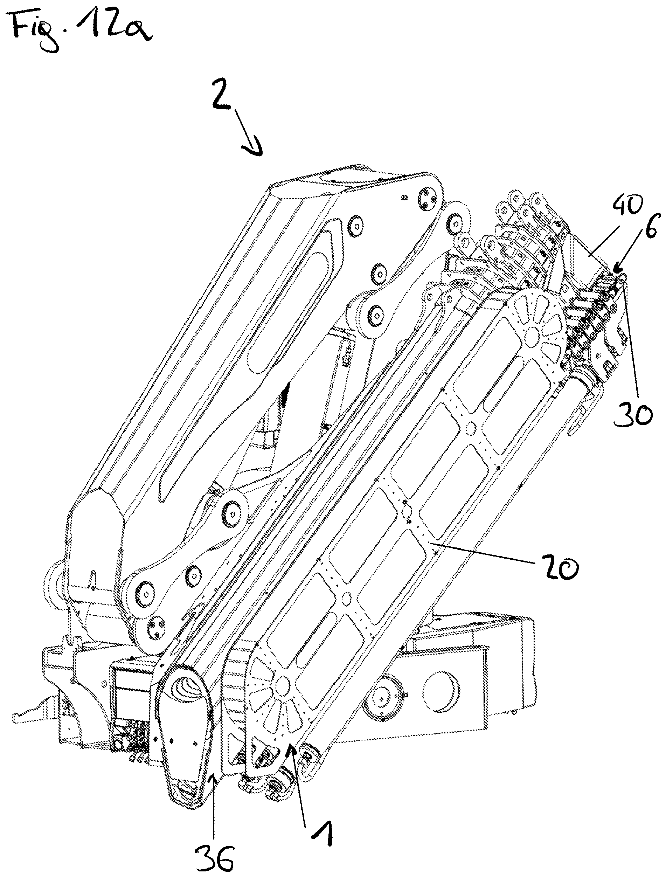

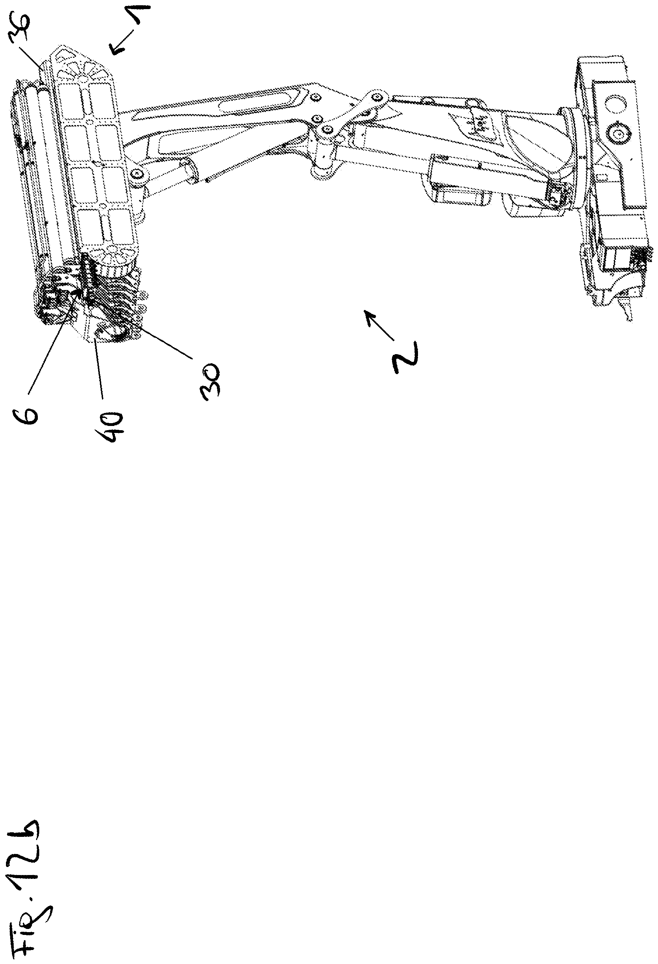

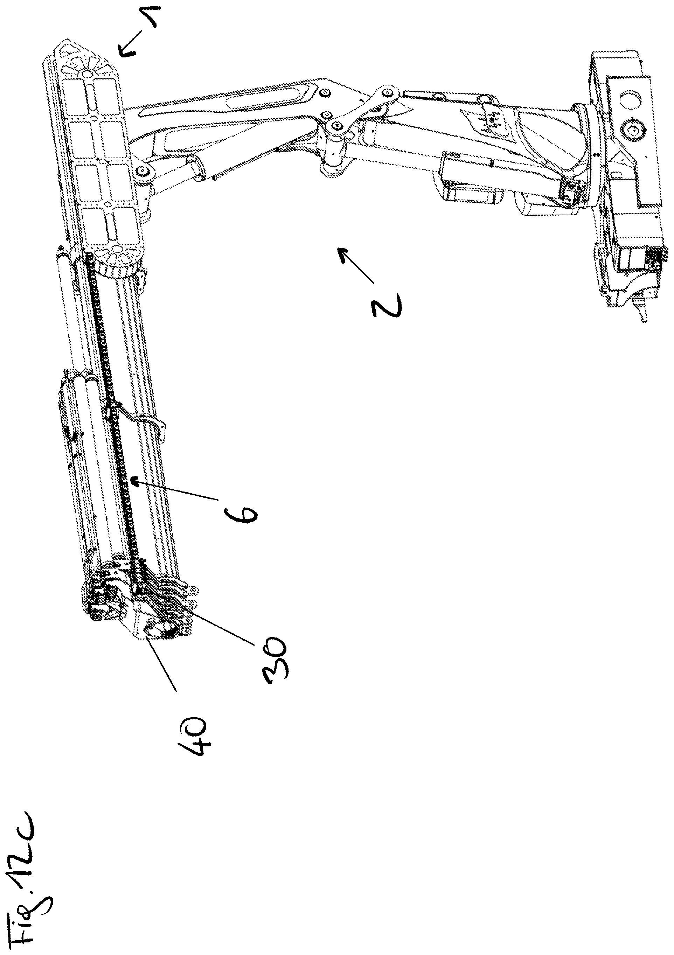

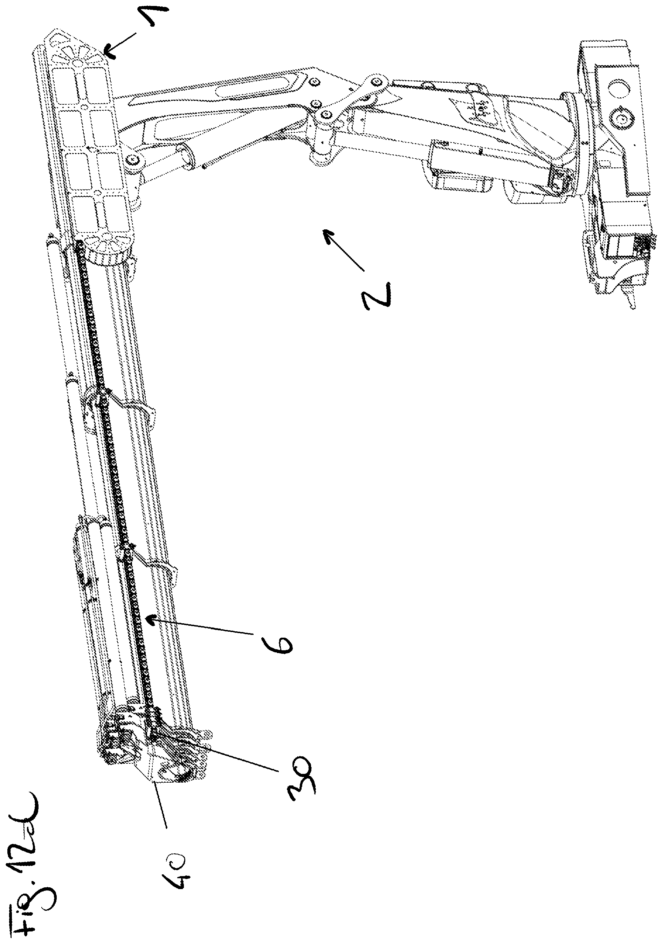

In Figur 1 ist ein Energiezuführsystem 1 gezeigt, welches mit einem Gehäuse 20, welches den Leitungsspeicher 3 beherbergt, an einem innenliegenden Ausleger 36 eines hier nicht näher dargestellten Hebezeug (siehe dazu Figur 12a bis 12d) angeordnet ist. Der im oder aus dem Leitungsspeicher 3 aufwindbare oder abwindbare Träger 6 ist mit einem ersten Ende 30 an einem relativ zum Leitungsspeicher 3 bewegbaren außenliegenden Ausleger 40 befestigt.

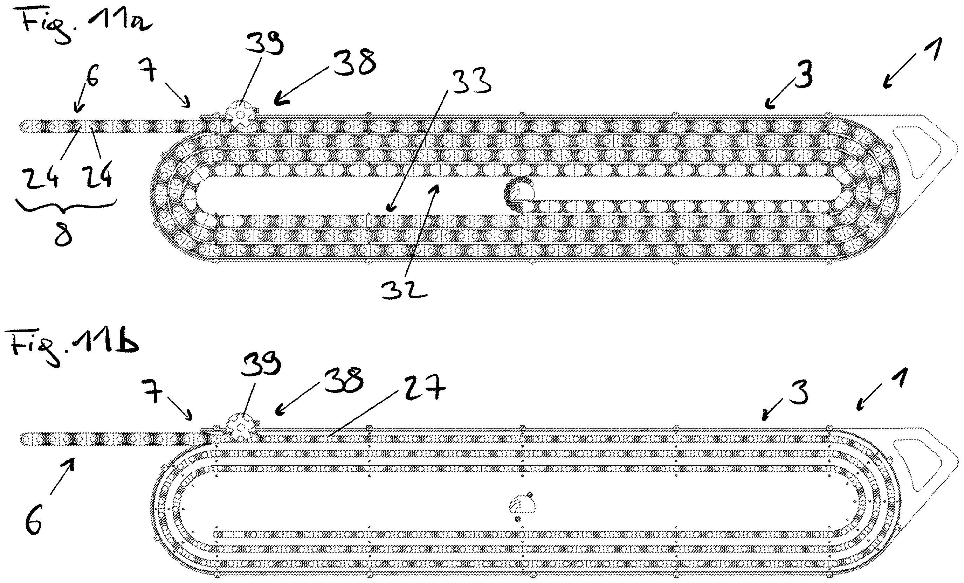

In Figur 2 ist in Isolation eine Ausführung eines Energiezuführsystems 1 mit einem in einem Gehäuse 20 angeordneten Leitungsspeicher 3 gezeigt, aus dessen Öffnung 7 ein Teil des Trägers 6 entnommen ist. Der Träger 6 ist in dieser Ausführung durch eine Kette 22 mit Kettengliedern 23, an denen Führungsmittel 8 in Form von zwei axial abstehenden Vorsprüngen 24 je Kettenglied 23 angeordnet sind, ausgebildet. Der Leitungsspeicher 3 weist in dieser Ausführung eine längliche, annähernd rechteckige Form auf. Diese Ausführung des Trägers 6 ist auch in der Ausführung des Energiespeichers 1 der Figuren 11a und 11b gezeigt.

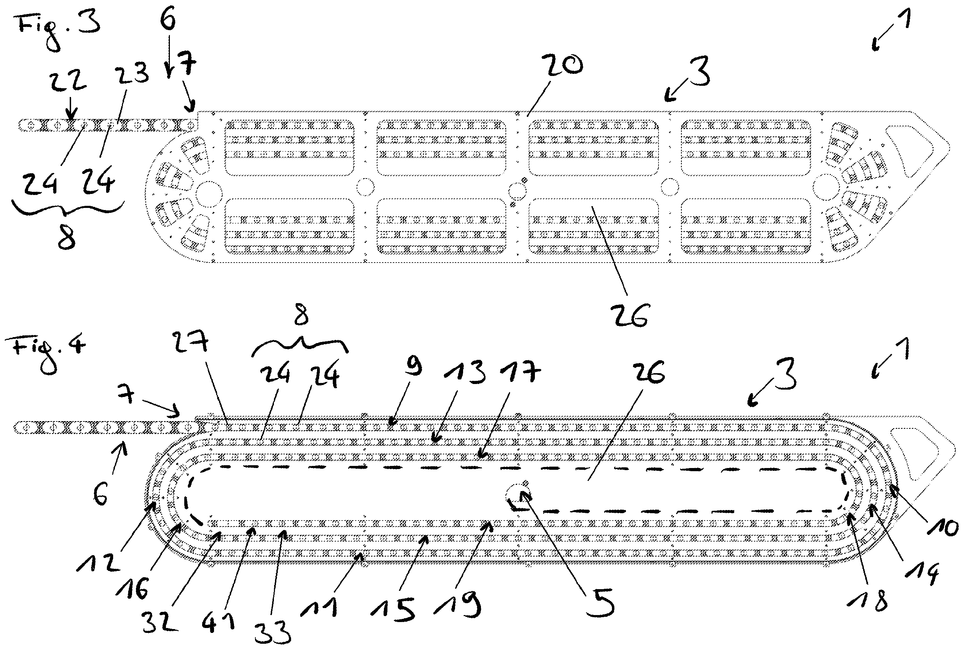

In Figur 3 ist eine weitere Ausführung eines Energiezuführsystems 1 in Isolation gezeigt, wobei das Energiezuführsystems 1 wieder einen in einem Gehäuse 20 angeordneten Leitungsspeicher 3 aufweist, aus dessen Öffnung 7 ein Teil des Trägers 6 entnommen ist. Der Träger 6 ist in dieser Ausführung durch eine Kette 22 mit Kettengliedern 23, an denen Führungsmittel 8 in Form von einem axial abstehenden Vorsprung 24 je Kettenglied 23 angeordnet ist, ausgebildet. Die Trägerplatte 26 des Leitungsspeichers 3 ist in dieser Darstellung durch eine teilweise Ausblendung des Deckels des Gehäuses 20 sichtbar gemacht worden.

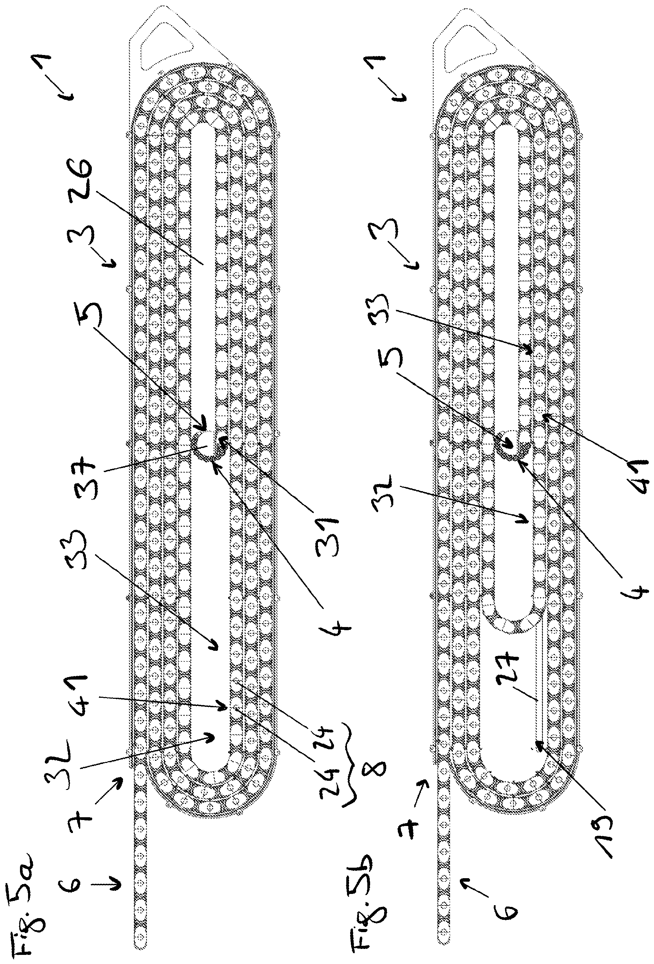

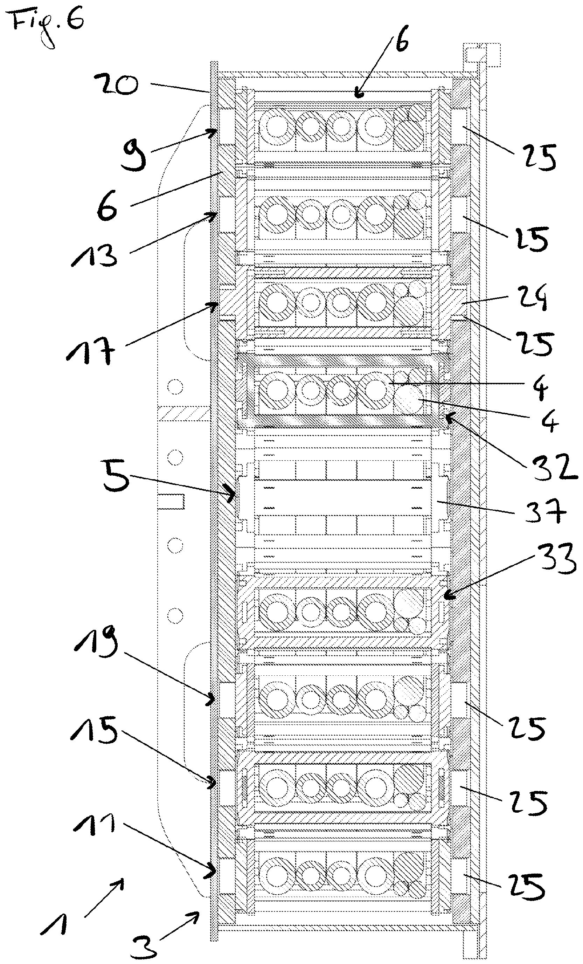

In Figur 4 ist eine Ansicht der Figur 3 gezeigt, in welcher der Deckel des Gehäuses 20 vollständig ausgeblendet wurde. Es ist erkennbar, dass der Träger 6 für wenigstens eine energieführende Leitung (hier nicht sichtbar, siehe dazu Figuren 5a-5j und Figur 6) zum Ein- und Austritt des Trägers 6 durch die Öffnung 7 des Leitungsspeichers 3 zur abschnittsweisen Führung des Trägers 6 und der Energieleitung im Leitungsspeicher 3 mit Führungsmitteln 8 über eine erste Führungsstrecke 9 durch einen ersten Führungsbogen 10 und über eine an den ersten Führungsbogen 10 anschließende zweite Führungsstrecke 11 durch einen zweiten Führungsbogen 12 und über eine an den zweiten Führungsbogen 12 anschließende und im Vergleich zur ersten Führungsstrecke 9 relativ zum Windungszentrum 5 (siehe auch Figur 5a) weiter innen liegende dritte Führungsstrecke 13 - und analog dazu über weitere Führungsbögen 15, 17 und Führungsstrecken 14, 16, 18 - zum Windungszentrums 5 des Leitungsspeichers 3 geführt ist. Der weitere Verlauf des Trägers 6 zwischen dem Ende der innersten Führungsstrecke 18 und dem Windungszentrum 5 ist in Figur 4 mit unterbrochenen Linien dargestellt und ist der Figur 5a im Detail zu entnehmen.

Die dritte Führungsstrecke 13 ist im Vergleich zur ersten Führungsstrecke 9 relativ zum Windungszentrum 5 weiter innen liegend angeordnet. Die erste Führungsstrecke 9 und die dritte Führungsstrecke 13 sind relativ zum Windungszentrum 5 einander gegenüberliegend angeordnet, wobei die dritte Führungsstrecke 13 näher am Windungszentrum 5 gelegen ist.

Es ist weiter ein an die dritte Führungsstrecke 13 anschließender, im Vergleich zum ersten Führungsbogen 10 relativ zum Windungszentrum 5 weiter innen liegender dritter Führungsbogen 14 gezeigt, an welchen eine im Vergleich zur zweiten Führungsstrecke 11 relativ zum Windungszentrum 5 weiter innen liegende vierte Führungsstrecke 15 anschließt. Analoges gilt für die weiteren Führungsbögen 16, 18 und weiten Führungsstrecken 17, 19. Es soll nicht ausgeschlossen sein, dass anders als dargestellt darüber hinaus noch weitere Führungsbögen und Führungsstrecken vorgesehen sind.

Die Führungsstrecken 9, 11, 13, 15, 17, 19 und Führungsbögen 10, 12, 14, 16, 18 bilden in der gezeigten Ausführung eine Führungsbahn 27 aus, wobei die Führungsbahn 27 von der Öffnung 7 zum Windungszentrum 5 hin einen im Wesentlichen spiralförmig gewundenen, sich in Richtung des Windungszentrums 5 verengenden Verlauf aufweist.

Es ist in der gezeigten Ausführung weiter zu erkennen, dass
- die Führungsbögen 10, 12, 14, 16, 18 im Wesentlichen einen Windungswinkel von 180 Grad aufweisen, und dass
- die Führungsbögen 10, 14, 18 bzw. die Führungsbögen 12, 16 unterschiedliche Krümmungsradien aufweisen, wobei die Führungsbögen 10, 14, 18 bzw. die Führungsbögen 12, 16 mit unterschiedlichen Krümmungsradien von der Öffnung 7 des Leitungsspeichers 3 zum Windungszentrum 5 hin einen abnehmenden Krümmungsradius aufweisen, und dass
- der jeweilige Krümmungsradius eines Führungsbogens konstant 10, 12, 14, 16, 18 ist.

Die Führungsbögen 10, 12, 14, 16, 18 sind in der gezeigten Ausführung jeweils im Wesentlichen halbkreisförmig ausgebildet.

Gruppen von Führungsbögen 10, 14, 18 und 12, 16 mit unterschiedlichen Krümmungsradien, welche von der Öffnung 7 des Leitungsspeichers 3 zum Windungszentrum 5 hin einen abnehmenden Krümmungsradius aufweisen, sind in der gezeigten Ausführung konzentrisch angeordnet. Die Gruppierung der Führungsbögen 10, 14, 18 und 12, 16 erfolgt auf gegenüberliegenden Seiten relativ zum Windungszentrum 5.

Die Führungsstrecken Führungsstrecken 9, 11, 13, 15, 17, 19 weisen in der gezeigten Ausführung einen im Wesentlichen geradlinigen Verlauf und im Wesentlichen die gleiche Längserstreckung auf.

Der Leitungsspeicher 3 weist in der gezeigten Ausführung im Wesentlichen eine längliche Form mit einer größeren Längserstreckung als Quererstreckung auf, wobei die Führungsstrecken Führungsstrecken 9, 11, 13, 15, 17, 19 im Wesentlichen entlang der Längserstreckung des Leitungsspeichers 3 verlaufen.

Der Ablauf der Figuren 5a bis 5j zeigt ein Abwinden des Trägers 6 aus dem Leitungsspeiche 3 gemäß der Ausführung der Figur 4. In umgekehrter Reihenfolge ist den Figuren ein Aufwinden des Trägers 6 in den Leitungsspeicher 3 zu entnehmen.

In Figur 5a ist ein im Wesentlichen vollständig aufgewundener Leitungsspeicher 3 dargestellt. Der geführte Teil des Abschnitts 33 des Trägers 6 mit Führungsmitteln 8 erstreckt sich dabei im Wesentlichen über die gesamte Länge der durch die Führungsstrecken 9, 11, 13, 15, 17, 19 und Führungsbögen 10, 12, 14, 16, 18 ausgebildeten Führungsbahn 27.

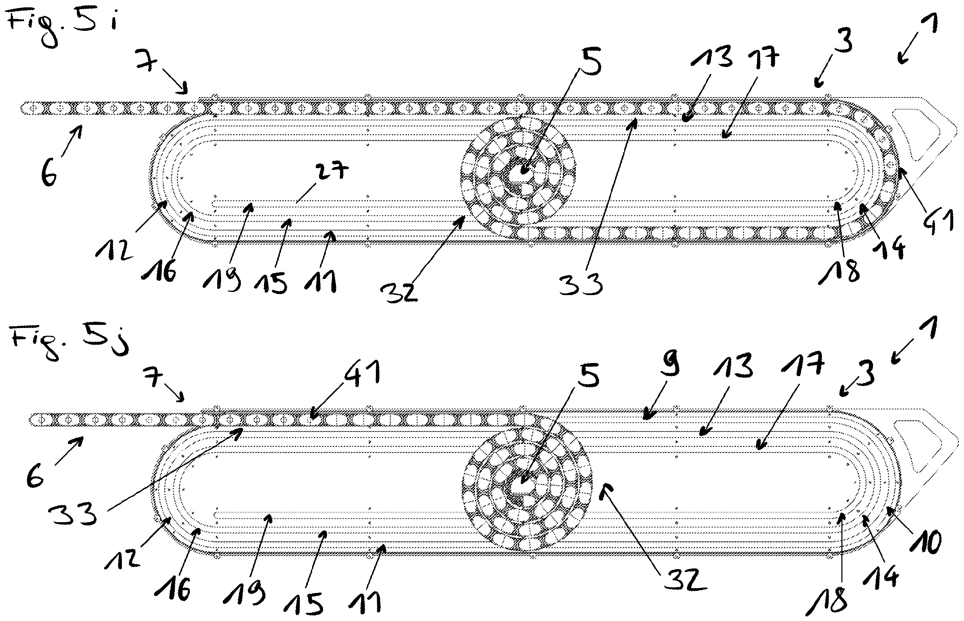

In Figur 5j ist ein im Wesentlichen vollständig abgewundener Leitungsspeicher 3 dargestellt. Der geführte Teil des Abschnitts 33 erstreckt sich dabei im Wesentlichen über minimale Länge der an die Öffnung 7 anschließenden Führungsstrecke 9. Der ungeführte Abschnitt 32 ist dabei - bedingt durch die drehfeste Durchführung 37 - im Wesentlichen vollständig um das Windungszentrum 5 aufgewunden worden.

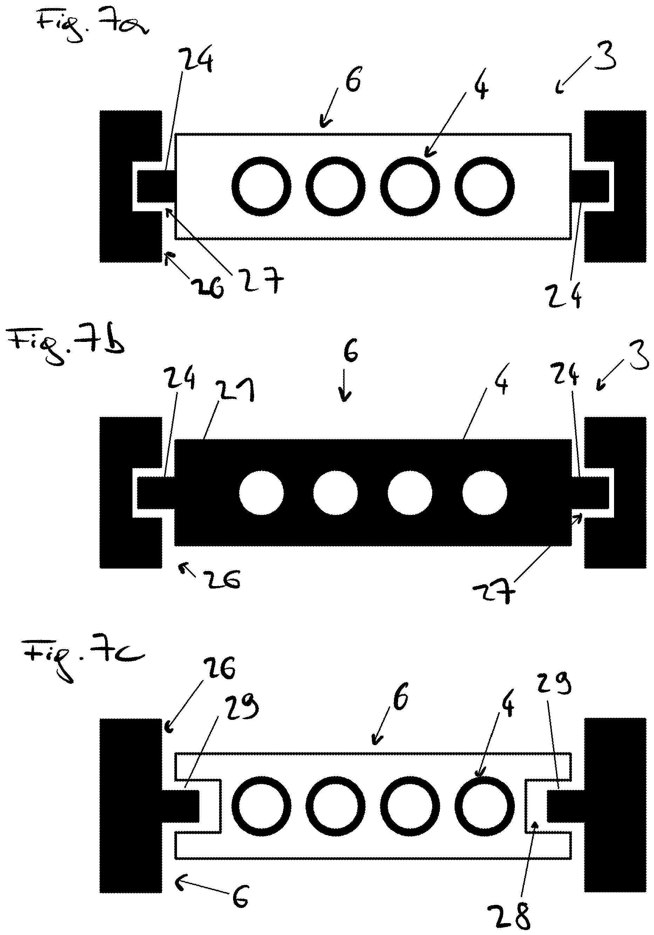

Bis auf die Länge des aus dem Leitungsspeicher 3 entnommenen Teils des Trägers 6 ist im Vergleich zur Figur 4 ist in den Figuren 5a bis 5j lediglich die in Figur 4 dargestellte Trägerplatte 26 ausgeblendet. Es ist zu erkennen, dass der Leitungsspeicher 3 rückseitig (in der Ansicht der Figuren 5a bis 5j perspektivisch hinter dem Träger 6 gelegen) eine weitere Trägerplatte 26 aufweist, welche wiederum Führungsstrecken 9, 11, 13, 15, 17, 19 und Führungsbögen 10, 12, 14, 16, 18 aufweist. Der Träger 6 ist abschnittsweise an den Führungsstrecken 9, 11, 13, 15, 17, 19 und Führungsbögen 10, 12, 14, 16, 18 geführt zum Windungszentrum 5 des Leitungsspeichers 3 geführt. Der Träger 6 ist durch das Vorhandensein der zwei Trägerplatten 6 beidseitig geführt (siehe auch Figuren 7a bis 7c) . Dies muss jedoch nicht so sein, da auch eine einseitige Führung denkbar ist.

In der gezeigten Ausführung ist die Führungsbahn 27 als eine einzelne durchgängige Nut in der Trägerplatte 26 des Leitungsspeichers 3 ausgebildet.

Die Führungsstrecken 9, 11, 13, 15, 17, 19 und Führungsbögen 10, 12, 14, 16, 18 sind derart angeordnet und beabstandet, dass sich der darauf aufgewundene Träger 6 zwischen benachbarten Führungsstrecken 9, 11, 13, 15, 17, 19 und Führungsbögen 10, 12, 14, 16, 18 nicht selbst berührt.

Der Träger 6 weist einen Abschnitt 32 mit Führungsmitteln 8 und einen Abschnitt 33 ohne Führungsmittel auf. Der Abschnitt 33 ohne Führungsmittel erstreckt sich vom zweiten Ende 31 des Trägers 6 bis zum Beginn des Abschnitts 32 mit Führungsmitteln 8, an welchem das erste Führungsmittel 41 des geführten Teils des Abschnitts 32 mit Führungsmitteln 8 angeordnet ist. Der Träger 6 ist am zweiten Ende 31 des Trägers 6 mit dem Windungszentrum 5 verbunden. Der Abschnitt 33 ohne Führungsmittel verläuft im Leitungsspeicher 3 ungeführt, das heißt er wird nicht durch die Führungsstrecken 9, 11, 13, 15, 17, 19 und Führungsbögen 10, 12, 14, 16, 18 geführt.

In anderen Worten weist der Träger 6 im Leitungsspeicher 3 einen geführten Abschnitt 33 mit Führungsmitteln 8 und einen ungeführten Abschnitt 32 ohne Führungsmittel auf. Der geführte Teil des Abschnitt 33 erstreckt sich im Wesentlichen von der Öffnung 7 des Leitungsspeichers 3 über die Führungsstrecken 9, 11, 13, 15, 17, 19 und Führungsbögen 10, 12, 14, 16, 18 bis zum Ende des Abschnitts 33 des Trägers 6 mit Führungsmitteln 8 bzw. bis zum Anfang des Abschnitts 32 des Trägers 6 ohne Führungsmittel 8. Der ungeführte Abschnitt 32 erstreckt sich von dort zum Windungszentrum 5.

In der in den Figuren 5a bis 5j gezeigten Ausführung kann der ungeführte Abschnitt 32 des Trägers 6 im Wesentlichen spiralförmig um das Windungszentrum 5 windbar sein und sich der Windungsradius des ungeführten Abschnitts 32 des Trägers 6 beim Auf- und Abwinden des geführten Teils des Abschnitt 33 mit Führungsmitteln 8 des Trägers 6 vergrößern oder verringern. Eine Vergrößerung - wie etwa im Übergang von Figur 5b zu 5a - oder Verringerung - wie etwa beim Übergang von Figur 5a zu 5b - des Windungsradius des ungeführten Abschnitts 32 kann bei einem Übergang zu einer losen (Aufwinden) oder engen (Abwinden) Windung vorliegen.

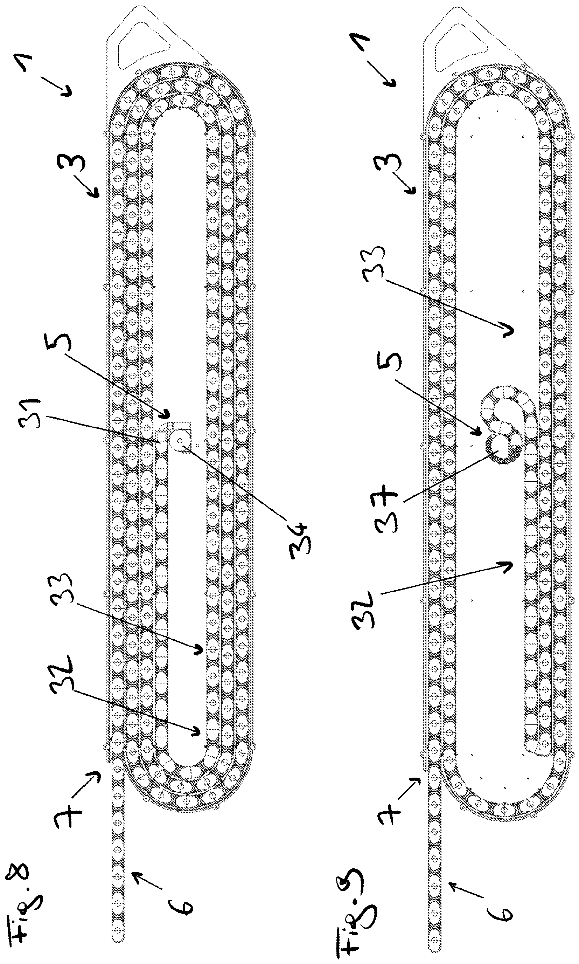

Zumindest eine Energieleitung 4 mündet in der gezeigten Ausführung im Windungszentrum 5 durch eine drehfeste Durchführung 37 in den Leitungsspeicher 3 ein. Der Träger 6 schießt tangential in Richtung der Führungsstrecken 9, 11, 13, 15, 17, 19 an die drehfeste Durchführung 37 an. Die sich bei einem Auf- und Abwinden des geführten Teils des Abschnitts 33 mit Führungsmitteln 8 des Trägers 6 ergebende Verwindung des ungeführten Abschnitts 32 mit einem im Windungszentrum 5 drehfest gehaltenem zweiten Ende 31, für welche in der nicht erfindungsgemäßen Ausführung der Figur 8 eine Drehdurchführung 34 vorgesehen ist, kann durch eine im Wesentlichen spiralförmige Windung des Abschnitts 32 um das Windungszentrum 5 und einen sich vergrößernden oder verringernden Windungsradius zugelassen werden. Der vom Auf- oder Abwinden des ungeführten Abschnitts 32 beanspruchte oder freiwerdende Platz im Leitungsspeicher 3 kann durch ein Aus- oder Eintreten des geführten Teils des Trägers 6 aus dem oder in den Leitungsspeicher 3 zur Verfügung gestellt oder aufgefüllt werden (vergleiche hierzu insbesondere Figuren 5a und 5j).

Bei einer Windung des ungeführten Abschnitts 32 des Trägers 6 um das Windungszentrum 5 stützt sich der ungeführte Abschnitt 32 am an den Führungsstrecken 9, 11, 13, 15, 17, 19 und Führungsbögen 10, 12, 14, 16, 18 geführten Abschnitt 33 des Trägers 6 ab und gleitet an diesem entlang. Insbesondere liegt dies bei einem sich vergrößernden Windungsradius (Übergang zu einer losen Windung) des ungeführten Abschnitts 32 beim Aufwinden des Abschnitts 33 vor.

Im Verlauf der Figur 5a zur Figur 5j wandert bei Entnahme des Trägers 6 aus dem Leistungsspeicher 3 das erste Führungsmittel 41 des geführten Teils des Abschnitts 32 von der innersten Führungsstrecke 19 entlang der durch die Führungsstrecken 9, 11, 13, 15, 17, 19 und Führungsbögen 10, 12, 14, 16, 18 ausgebildeten Führungsbahn 27 in Richtung der Öffnung 7. Ein Austritt des Trägers 6 aus dem Leitungsspeicher 3 erfolgt an einer festen Position.

Durch die Führungsstrecken 9, 11, 13, 15, 17, 19 und Führungsbögen 10, 12, 14, 16, 18 und die korrespondierenden Führungsmittel 8 kann der Träger 6 abschnittsweise im Leitungsspeicher 3 schubfest geführt werden. Bei einer auf den Träger 3 ausgeübten Zug- oder Schubkraft in Richtung des Trägers 6 kann dieser entlang den Führungsstrecken 9, 11, 13, 15, 17, 19 und Führungsbögen 10, 12, 14, 16, 18 geführt bewegt werden. Die Führungsstrecken 9, 11, 13, 15, 17, 19 und Führungsbögen 10, 12, 14, 16, 18 und die korrespondierenden Führungsmittel 8 greifen dabei derart ineinander ein, dass nur eine Bewegung des Trägers 6 entlang der Führungsstrecken 9, 11, 13, 15, 17, 19 und Führungsbögen 10, 12, 14, 16, 18 möglich ist. Ein Ausknicken und somit ungeordnetes Auf- und Abwinden des Trägers 6 kann dadurch verhindert werden.

In Figur 6 ist ein Querschnitt durch den Energiespeicher 1 gemäß der Ausführung der Figur 5a gezeigt.

Dabei sind mehrere im Inneren des Trägers 6 angeordnete Energieleitungen 4 erkennbar. Der Träger 6 weist im Abschnitt 33 mit Führungsmitteln 8 von Träger 6 abstehende, axiale Vorsprünge mit daran gelagerten Rollen 25 auf, welche in die Führungsstrecken 9, 11, 13, 15, 17, 19 und Führungsbögen (hier nicht sichtbar) in der Trägerplatte 6 eingreifen. Der ungeführte Abschnitt 32 ohne Führungsmittel ist nicht durch die Führungsstrecken und Führungsbögen geführt.

Es ist erkennbar, dass ein Auf- und Abwinden des Trägers 6 im Wesentlichen in einer Ebene parallel zur Trägerplatte 6 erfolgt. Auch ist erkennbar, dass der Träger 6 eine im Wesentlichen gleichbleibende Quererstreckung aufweist.

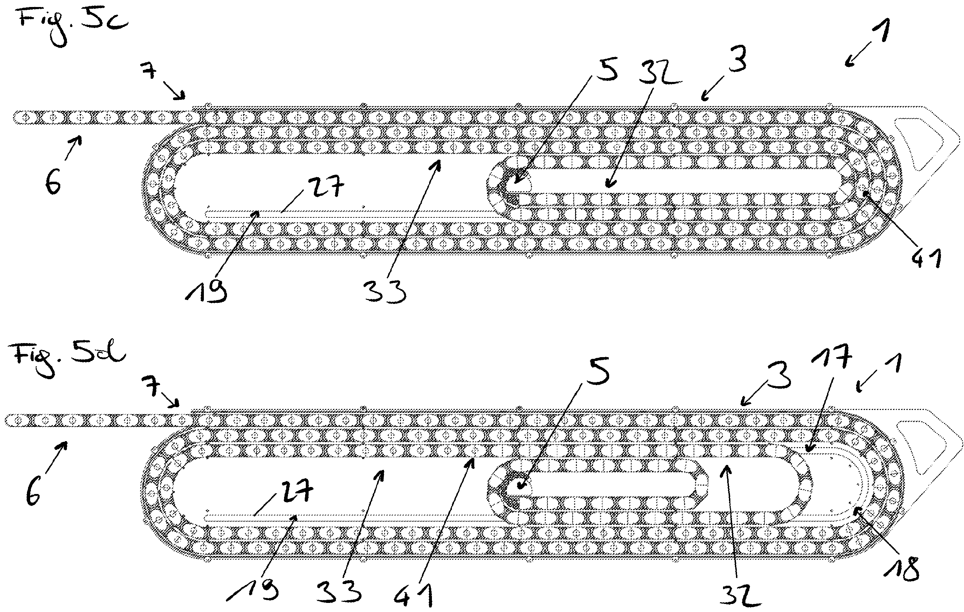

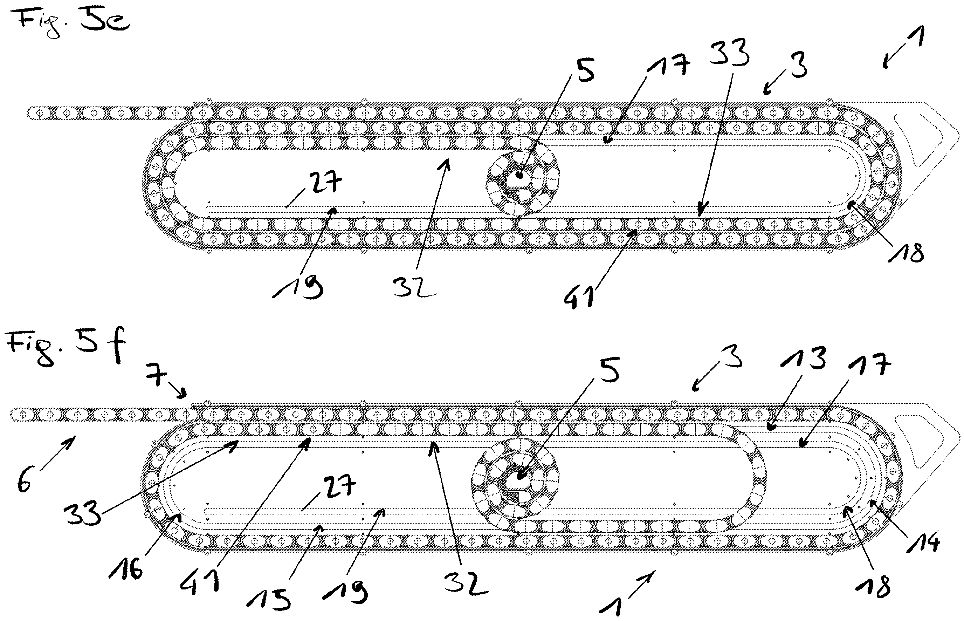

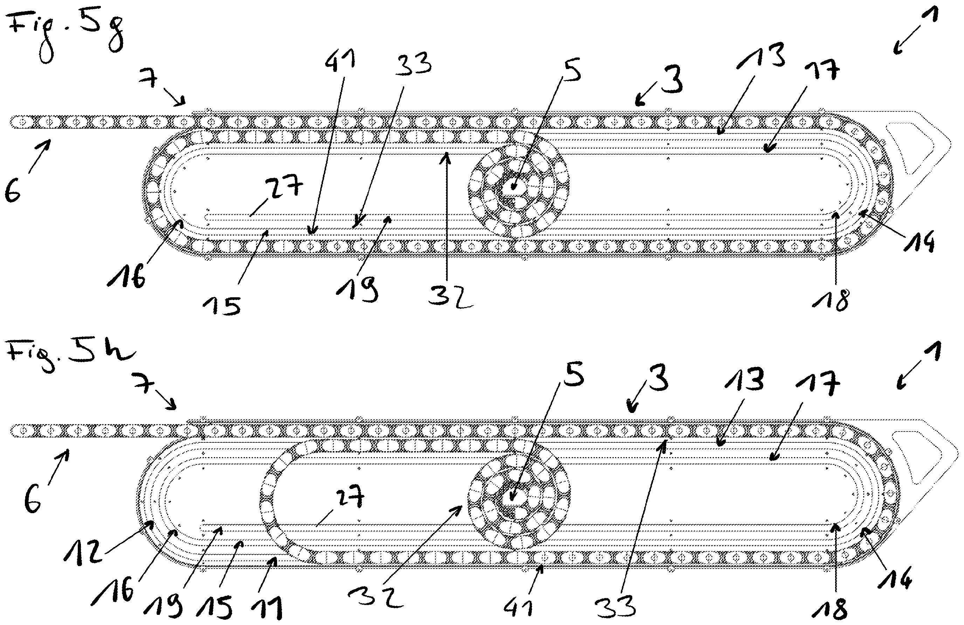

In Figur 7a ist schematisch eine Ausführung des Trägers 6 gezeigt, bei welcher der Träger 6 axial von diesem abstehende Vorsprünge 24 aufweist, welche in eine nutförmige Führungsbahn 27 der Trägerplatte 26 des Leitungsspeichers 3 eingreift. Im Inneren des Trägers 6 sind Energieleitungen 4 angeordnet. Diese Ausführung entspricht im Wesentlichen jener der Figuren 5 und 6.

In Figur 7b ist schematisch eine Ausführung des Trägers 6 gezeigt, bei welcher der Träger 6 in Form einer Hülle 21 der Energieleitung 4 ausgebildet ist. Eine Führung des Trägers 6 ist analog zur Ausführung der Figur 7b mit axial abstehenden Vorsprüngen 24 und einer Führungsbahn 27 ausgebildet.

In Figur 7c ist schematisch eine Ausführung des Trägers 6 gezeigt, bei welcher die Führungsmittel des Trägers 6 als Führungsbahn 28, hier in Form einer Nut, in zumindest einem Teil des Trägers 6 ausgebildet ist und die Führungsbögen und Führungsstrecken in Form einer Anordnung aus von der Trägerplatte 6 abstehenden Vorsprüngen 29 ausgebildet ist. Bei Ausbildung des Trägers 6 als eine Kette mit Kettengliedern kann die Führungsbahn 28 in Form von aneinandergereihten Führungsbahnen in einzelnen Kettengliedern ausgebildet sein. Die Anordnung aus von der Trägerplatte 6 abstehenden Vorsprüngen 29 kann an den Verlauf der durch die Führungsstrecken 9, 11, 13, 15, 17, 19 und Führungsbögen 10, 12, 14, 16, 18 ausgebildeten Führungsbahn 27 der Ausführung der Figuren 5 und 6 angelehnt sein. Eine zur schematischen Darstellung der Figur 7b analoge Ausführung des Trägers 6 in Form einer Hülle 21 der Energieleitung 4 ist ebenso denkbar.

In Figur 8 ist eine zur Ausführung der Figur 5 analoge Ausführung des Energiespeichers 1 gezeigt, wobei hier im Unterschied zur Ausführung der Figur 5 im Windungszentrum 5 eine Drehdurchführung 34 vorgesehen ist. Die wie zur Ausführung der Figur 5 beschriebene, sich bei einem Auf- und Abwinden des geführten Abschnitts 33 des Trägers 6 ergebende Verwindung des ungeführten Abschnitts 32 kann hier durch eine Verbindung des zweiten Endes 31 des Trägers 6 mit der Drehdurchführung 34 zugelassen oder verhindert werden. Da ich hier bei einer Entnahme des Trägers 6 aus dem Leitungsspeicher 3 kein spiralförmiges Aufwinden des ungeführten Abschnitts 32 um das Windungszentrum 5 erfolgt, kann der ungeführte Abschnitt 32 in seiner Längserstreckung kürzer ausgeführt werden. Auch kann die Querstreckung des Leitungsspeichers 3 geringer ausfallen.

In Figur 9 ist eine zur Ausführung der Figur 5 analoge Ausführung des Energiespeichers 1 gezeigt, wobei hier ebenso im Windungszentrum 5 eine drehfeste Durchführung 37 vorgesehen ist, jedoch im Unterschied zur Ausführung der Figur 5 der ungeführte Abschnitt 32 des Trägers 6 beim Auf- und Abwinden des geführten Abschnitts 33 des Trägers 6 in gegenläufigen Lagen um das Windungszentrum 5 auf- und abwindbar ist. Bei fortschreitendem Abwinden des Trägers 6 aus dem Leitungsspeicher 3, oder am Anfang des Aufwindens des Trägers 6 im Leitungsspeicher 3, kann eine im Wesentlichen spiralförmig erfolgende Windung des ungeführten Abschnitts 32 um das Windungszentrum 5 erfolgen.

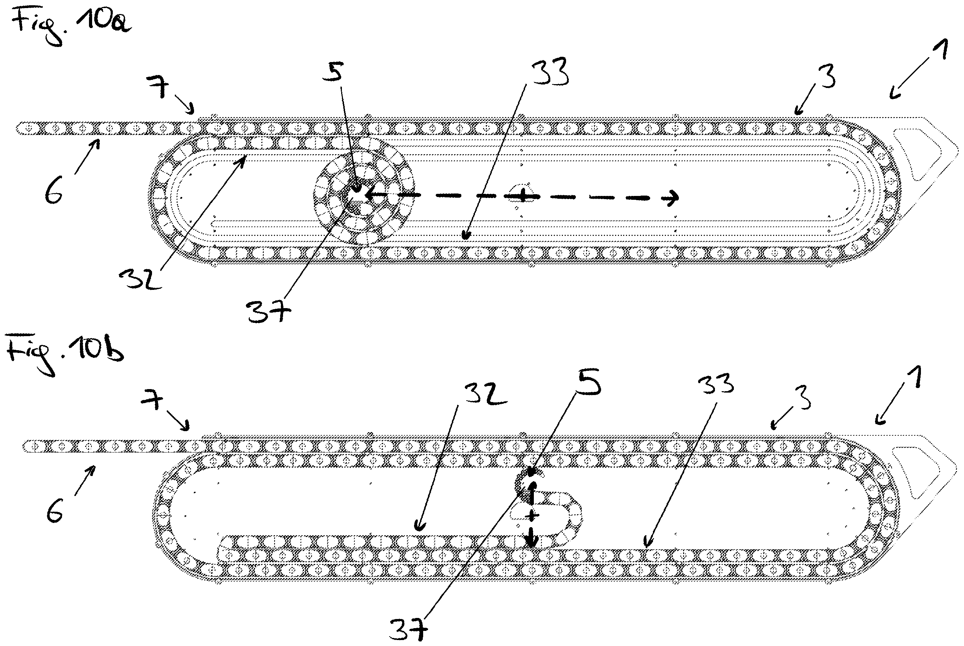

In Figur 10a ist eine Ausführung eines Energiespeichers 1 dargestellt, bei welcher die Position des Windungszentrums 5 im Leitungsspeicher 3 verstellbar ist. Der Verstellbereich ist durch eine unterbrochene Linie dargestellt. Das Windungszentrum 5 ist in Figur 10a im Leitungsspeicher 3 linear in Richtung der Führungsstrecken 9, 11, 13, 15, 17, 19 verfahrbar angeordnet.

In Figur 10b ist eine Ausführung eines Energiespeichers 1 dargestellt, bei welcher die Position des Windungszentrums 5 im Leitungsspeicher 3 verstellbar ist. Der Verstellbereich ist wieder durch eine unterbrochene Linie dargestellt. Das Windungszentrum 5 ist in Figur 10b im Leitungsspeicher 3 linear quer zu den Führungsstrecken 9, 11, 13, 15, 17, 19 verfahrbar angeordnet.

Durch eine Verstellbarkeit der Position des Windungszentrums 5 im Leitungsspeicher 3 kann sich die Länge des ungeführten Abschnitts 33 des Trägers 6 reduzieren lassen.

In den Figuren 11a und 11b ein auf den Träger 6 wirkender Antrieb 38 zum Auf- und Abwinden des zumindest einen Trägers 6 dargestellt. Der Antrieb 38 weist ein Zahnrad 39 auf, welches in die Führungsmittel 8 in Form der Vorsprünge 24 des im Leitungsspeicher 3 geführten Abschnitts 33 des Trägers 6 eingreift. Der auf den Träger 6 wirkende Antrieb 38 mit dem Zahnrad 39 ist in dieser Ausführung benachbart zur Öffnung 7 am Anfang der Führungsbahn 27 angeordnet. Eine Anordnung an einer anderen Stelle der Führungsbahn ist ebenso denkbar.

In den Figuren 12a bis 12c ist ein Hebezeug 2 mit einem Energiezuführsystem 1 dargestellt.

Das Energiezuführsystem 1 ist mit dem Gehäuse 20 an einem innenliegenden Ausleger 36, beispielsweise einem Arm eines teleskopierbaren Armssystems, des Hebezeugs 2 befestigt. Ein vom Energiezuführsystem 1 versorgtes, hier nicht dargestelltes Arbeitsgerät kann an dem dazu bewegbaren, außenliegenden Ausleger 40, beispielsweise am Ende eines Teleskopauslegers eines teleskopierbaren Armsystems, angeordnet sein. Der Träger 6 ist dabei mit dessen ersten Ende 30 mit dem Arbeitsgerät oder dem außenliegenden Ausleger 40 verbindbar.

Das Energiezuführsystem 1 kann eine Relativbewegung des Auslegers 40 und damit des Arbeitsgeräts zum Leitungsspeicher 3 erlauben. Das Arbeitsgerät kann während der Bewegung mit dem Träger 6 und der Energieleitung 4 verbunden bleiben und die Länge des aus dem Leitungsspeicher 3 entnommenen Abschnitts des Trägers 6 und der Energieleitung 4 kann an die Relativbewegung zwischen Arbeitsgerät und Leitungsspeicher 3 angepasst werden.

### Bezugszeichenliste:

- 1: Energiezuführsystem
- 2: Hebezeug
- 3: Leitungsspeicher
- 4: Energieleitung
- 5: Windungszentrum
- 6: Träger
- 7: Öffnung
- 8: Führungsmittel
- 9: erste Führungsstrecke
- 10: erster Führungsbogen
- 11: zweite Führungsstrecke
- 12: zweiter Führungsbogen
- 13: dritte Führungsstrecke
- 14: dritter Führungsbogen
- 15: vierte Führungsstrecke
- 16: vierter Führungsbogen
- 17: fünfte Führungsstrecke
- 18: fünfter Führungsbogen
- 19: sechste Führungsstrecke
- 20: Gehäuse
- 21: Hülle
- 22: Kette
- 23: Kettenglied
- 24: Vorsprung Führungsmittel
- 25: Rolle
- 26: Trägerplatte
- 27: Führungsbahn Trägerplatte
- 28: Führungsbahn Hülle
- 29: Vorsprung Trägerplatte
- 30: erstes Ende Träger
- 31: zweites Ende Träger
- 32: Abschnitt mit Führungsmitteln
- 33: Abschnitt ohne Führungsmittel
- 34: Drehdurchführung
- 35: Hebezeug
- 36: Ausleger
- 37: Drehfeste Durchführung
- 38: Antrieb
- 39: Zahnrad
- 40: Ausleger
- 41: erstes Führungsmittel

## Patentansprüche

1. Energiezuführsystem (1), insbesondere für ein an einem Hebezeug (2) befestigbares oder befestigtes Arbeitsgerät, mit einem Leitungsspeicher (3) zum Auf- und Abwinden zumindest einer Energieleitung (4) um ein Windungszentrum (5) des Leitungsspeichers (3), wobei zumindest ein Träger (6) für die wenigstens eine Energieleitung (4) vorgesehen ist und der Leitungsspeicher (3) eine Öffnung (7) zum Ein- und Austritt des Trägers (6) und der Energieleitung (4) aufweist, wobei der zumindest eine Träger (6) durch die Öffnung (7) zur abschnittsweisen Führung des Trägers (6) und der Energieleitung (4) im Leitungsspeicher (3) mit Führungsmitteln (8) über eine erste Führungsstrecke (9) durch einen ersten Führungsbogen (10) und über eine an den ersten Führungsbogen (10) anschließende zweite Führungsstrecke (11) durch einen zweiten Führungsbogen (12) und über eine an den zweiten Führungsbogen (12) anschließende und im Vergleich zur ersten Führungsstrecke (9) relativ zum Windungszentrum (5) weiter innen liegende dritte Führungsstrecke (13) - und gegebenenfalls weitere Führungsbögen und Führungsstrecken - zum Windungszentrum (5) des Leitungsspeichers (3) führbar ist, wobei der Träger (6) ein äußeres, erstes Ende (30) und ein inneres, zweites Ende (31) aufweist und der Träger (6) einen Abschnitt (32) mit Führungsmitteln (8) und einen Abschnitt (33) ohne Führungsmittel aufweist, wobei sich der Abschnitt (33) ohne Führungsmittel vom zweiten Ende (31) bis zum Abschnitt (32) mit Führungsmitteln erstreckt und der Träger (6) am zweiten Ende (31) des Trägers (6) mit dem Windungszentrum (5) verbunden ist und der Abschnitt (33) ohne Führungsmittel im Leitungsspeicher (3) ungeführt ist, wobei der ungeführte Abschnitt (33) des Trägers (6) im Wesentlichen spiralförmig um das Windungszentrum (5) windbar ist, **dadurch gekennzeichnet, dass** sich der Windungsradius des ungeführten Abschnitts (33) des Trägers (6) beim Auf- und Abwinden des geführten Teils des Abschnitts (33) des Trägers (6) vergrößert oder verringert, wobei die Energieleitung (4) im Windungszentrum (5) durch eine drehfeste Durchführung in den Leitungsspeicher (3) einmündet.

2. Energiezuführsystem nach Anspruch 1, wobei der Träger in Form zumindest einer Hülle (21) der Energieleitung (4) oder in Form zumindest einer Kette (22) mit gelenkig miteinander verbundenen Kettengliedern (23) ausgebildet ist.

3. Energiezuführsystem nach einem der vorangehenden Ansprüche, wobei
- die Führungsmittel (8) des Trägers (6) als von zumindest einem Teil des Trägers (6) abstehende, axiale Vorsprünge (24), vorzugsweise mit daran angeordneten Rollen (25), ausgebildet sind und der Leitungsspeicher (3) zumindest eine flächige Trägerplatte (26) aufweist und die Führungsbögen und Führungsstrecken in Form einer Führungsbahn (27), vorzugsweise in Form einer Nut, in der Trägerplatte (26) ausgebildet sind, oder
- die Führungsmittel (8) des Trägers (6) als Führungsbahn (28) in Form von Führungsbahnen, vorzugsweise in Form von Nuten, in zumindest einem Teil des Trägers 6 ausgebildet sind und die Führungsbögen und Führungsstrecken in Form einer Anordnung aus von der Trägerplatte abstehenden Vorsprüngen (29), vorzugsweise mit daran angeordneten Rollen, ausgebildet sind.

4. Energiezuführsystem nach einem der vorangehenden Ansprüche, wobei der ungeführte Abschnitt (33) des Trägers (6) beim Auf- und Abwinden des geführten Teils des Abschnitts (32) des Trägers (6) in gegenläufigen Lagen um das Windungszentrum (5) auf- und abwindbar ist.

5. Energiezuführsystem nach einem der vorangehenden Ansprüche, wobei der Abstand der Führungsbögen (10, 12, 14, 16, 18) zueinander im Wesentlichen unveränderlich ist.

6. Energiezuführsystem nach einem der vorangehenden Ansprüche, wobei
- die Führungsbögen (10, 12, 14, 16, 18) im Wesentlichen einen Windungswinkel von 180 Grad aufweisen und/oder
- die Führungsbögen (10, 12, 14, 16, 18) gleiche und/oder unterschiedliche Krümmungsradien aufweisen, wobei die Führungsbögen (10, 12, 14, 16, 18) mit unterschiedlichen Krümmungsradien von der Öffnung (7) des Leitungsspeichers (3) zum Windungszentrum (5) hin einen abnehmenden Krümmungsradius aufweisen, und/oder
- der jeweilige Krümmungsradius eines Führungsbogens (10, 12, 14, 16, 18) konstant ist.

7. Energiezuführsystem nach einem der vorangehenden Ansprüche, wobei die jeweiligen Führungsstrecken (9, 11, 13, 15, 17, 19) einen im Wesentlichen geradlinigen Verlauf und/oder im Wesentlichen die gleiche Längserstreckung aufweisen.

8. Energiezuführsystem nach einem der vorangehenden Ansprüche, wobei der Leitungsspeicher (3) im Wesentlichen eine längliche Form mit einer größeren Längserstreckung als Quererstreckung aufweist und die Führungsstrecken (9, 11, 13, 15, 17, 19) im Wesentlichen entlang der Längserstreckung des Leitungsspeichers (3) verlaufen.

9. Energiezuführsystem nach einem der vorangehenden Ansprüche, wobei das Auf- und Abwinden des zumindest einen Trägers (6) im Wesentlichen in einer Ebene erfolgt.

10. Energiezuführsystem nach einem der vorangehenden Ansprüche, wobei der Ein- und Austritt des zumindest einen Trägers (6) durch die Öffnung (7) an einer festen Position des Leitungsspeichers (3) erfolgt.

11. Energiezuführsystem nach einem der vorangehenden Ansprüche, wobei der zumindest eine Träger (6) eine im Wesentlichen gleichbleibende Quererstreckung aufweist.

12. Energiezuführsystem nach einem der vorangehenden Ansprüche, wobei die Führungsbögen (10, 12, 14, 16, 18) und Führungsstrecken (9, 11, 13, 15, 17, 19) von der Öffnung (7) zum Windungszentrum (5) hin einen im Wesentlichen spiralförmigen Verlauf aufweisen und der zumindest eine Träger (6) abschnittsweise im Wesentlichen spiralförmig im Leitungsspeicher (3) zum Windungszentrum (5) hin auf- und abwindbar ist.

13. Energiezuführsystem nach einem der vorangehenden Ansprüche, wobei die Position des Windungszentrums (5) im Leitungsspeicher (3) verstellbar ausgebildet ist, wobei vorzugsweise das Windungszentrum (5) im Leitungsspeicher (3) linear verfahrbar, besonders vorzugsweise linear in Richtung der und/oder quer zu den Führungsstrecken (9, 11, 13, 15, 17, 19) verfahrbar, angeordnet ist.

14. Hebezeug (35), insbesondere Kran, mit einem Energiezuführsystem (1) nach einem der vorangehenden Ansprüche.

15. Hebezeug (35) nach dem vorangehenden Anspruch, wobei das Energiezuführsystem (1) an einem Ausleger (36) des Hebezeugs (35) befestigt ist.

## Claims

1. An energy supply system (1), in particular for a tool which can be attached or is attached to a hoist (2), having a line storage (3) for winding and unwinding at least one energy line (4) around a winding center (5) of the line storage (3), wherein at least one carrier (6) is provided for the at least one energy line (4), and the line storage (3) has an opening (7) for the inlet and outlet of the carrier (6) and the energy line (4), wherein the at least one carrier (6) can be guided through the opening (7) for guiding the carrier (6) and the energy line (4) in sections in the line storage (3) by guide means (8) via a first guide section (9) through a first guide arch (10), and via a second guide section (11), which is adjoining the first guide arch (10), through a second guide arch (12), and via a third guide section (13), which is adjoining the second guide arch (12), and lies further inwards, compared with the first guide section (9), relative to the winding center (5) - and possibly further guide arches and guide sections - to the winding center (5) of the line storage (3), wherein the carrier (6) has an outer, first end (30) and an inner, second end (31), and the carrier (6) has a section (32) with guide means (8) and a section (33) without guide means, wherein the section (33) without guide means extends from the second end (31) to the section (32) with guide means, and the carrier (6) is connected to the winding center (5) at the second end (31) of the carrier (6), and the section (33) without guide means is unguided in the line storage (3), wherein the unguided section (33) of the carrier (6) can be wound essentially spirally around the winding center (5), **characterized in that** the winding radius of the unguided section (33) of the carrier (6) increases or decreases as the guided part of the section (33) of the carrier (6) is wound or unwound, wherein the energy line (4) in the winding center (5) leads into the line storage (3) through a non-rotatable joint.

2. The energy supply system according to claim 1, wherein the carrier is designed in the form of at least one sheath (21) of the energy line (4), or in the form of at least one chain (22) with chain links (23) connected to each other in a jointed manner.

3. The energy supply system according to one of the preceding claims, wherein
∘ the guide means (8) of the carrier (6) are designed as axial protrusions (24) protruding from at least part of the carrier (6), preferably with rollers (25) arranged thereon, and the line storage (3) has at least one planar carrier plate (26), and the guide arches and guide sections are designed in the form of a guide track (27), preferably in the form of a groove, in the carrier plate (26), or
∘ the guide means (8) of the carrier (6) are designed as guide track (28) in the form of guide tracks, preferably in the form of grooves, in at least part of the carrier 6, and the guide arches and guide sections are designed in the form of an arrangement of protrusions (29) protruding from the carrier plate, preferably with rollers arranged thereon.

4. The energy supply system according to one of the preceding claims, wherein the unguided section (33) of the carrier (6) can be wound and unwound in reverse layers about the winding center (5) as the guided part of the section (31) of the carrier (6) is wound and unwound.

5. The energy supply system according to one of the preceding claims, wherein the distance of the guide arches (10, 12, 14, 16, 18) from each other is essentially invariable.

6. The energy supply system according to one of the preceding claims, wherein
∘ the guide arches (10, 12, 14, 16, 18) essentially have a winding angle of 180 degrees, and/or
∘ the guide arches (10, 12, 14, 16, 18) have the same and/or different radii of curvature, wherein the guide arches (10, 12, 14, 16, 18) with different radii of curvature have a decreasing radius of curvature from the opening (7) of the line storage (3) towards the winding center (5), and/or
∘ the respective radius of curvature of a guide arch (10, 12, 14, 16, 18) is consistent.

7. The energy supply system according to one of the preceding claims, wherein the respective guide sections (9, 11, 13, 15, 17, 19) have an essentially straight course and/or essentially the same longitudinal extent.

8. The energy supply system according to one of the preceding claims, wherein the line storage (3) has essentially an elongated shape with a greater longitudinal extent than transverse extent, and the guide sections (9, 11, 13, 15, 17, 19) run essentially along the longitudinal extent of the line storage (3).

9. The energy supply system according to one of the preceding claims, wherein winding and unwinding of the at least one carrier (6) is essentially in one plane.

10. The energy supply system according to one of the preceding claims, wherein the inlet and outlet of the at least one carrier (6) takes place through the opening (7) at a fixed position of the line storage (3).

11. The energy supply system according to one of the preceding claims, wherein the at least one carrier (6) has an essentially consistent transverse extent.

12. The energy supply system according to one of the preceding claims, wherein the guide arches (10, 12, 14, 16, 18) and guide sections (9, 11, 13, 15, 17, 19) have an essentially spiral course from the opening (7) towards the winding center (5), and the at least one carrier (6) can be wound and unwound in sections essentially spirally in the line storage (3) towards the winding center (5).

13. The energy supply system according to one of the preceding claims, wherein the position of the winding center (5) in the line storage (3) is designed to be adjustable, wherein preferably the winding center (5) in the line storage (3) is arranged to be linearly movable, in particular preferably, linearly movable in the direction of and/or transverse to the guide sections (9, 11, 13, 15, 17, 19).

14. A hoist (35), in particular a crane, comprising an energy supply system (1) according to one of the preceding claims.

15. The hoist (35) according to the preceding claim, wherein the energy supply system (1) is attached to an outrigger (36) of the hoist (35).

## Revendications

1. Système d'alimentation en énergie (1), en particulier pour un outillage fixé ou pouvant être fixé à un mécanisme de levage (2), avec une réserve de câble (3) pour l'enroulement et le déroulement au moins d'un câble d'énergie (4) autour d'un centre d'enroulement (5) de la réserve de câble (3), dans lequel au moins un support (6) est prévu pour l'au moins un câble d'énergie (4) et la réserve de câble (3) présente une ouverture (7) pour l'entrée et la sortie du support (6) et du câble d'énergie (4), dans lequel l'au moins un support (6) peut être guidé à travers l'ouverture (7) pour le guidage par sections du support (6) et du câble d'énergie (4) dans la réserve de câble (3) avec des moyens de guidage (8) sur un premier trajet de guidage (9) par un premier arc de guidage (10) et sur un deuxième trajet de guidage (11) contigu au premier arc de guidage (10) par un deuxième arc de guidage (12) et sur un troisième trajet de guidage (13) se trouvant plus vers l'intérieur par rapport au premier trajet de guidage (9) par rapport au centre d'enroulement (5) et contigu au deuxième arc de guidage (12) - et éventuellement d'autres arcs de guidage et trajets de guidage - vers le centre d'enroulement (5) de la réserve de câble (3), dans lequel le support (6) présente une première extrémité (30) extérieure et une deuxième extrémité (31) intérieure et le support (6) présente une section (32) avec des moyens de guidage (8) et une section (33) sans moyen de guidage, dans lequel la section (33) s'étend sans moyen de guidage de la deuxième extrémité (31) à la section (32) avec des moyens de guidage et le support (6) est relié à la deuxième extrémité (31) du support (6) au centre d'enroulement (5) et la section (33) n'est pas guidée sans moyen de guidage dans la réserve de câble (3), dans lequel la section (33) non guidée du support (6) est enroulable sensiblement en spirale autour du centre d'enroulement (5), **caractérisé en ce que** le rayon d'enroulement de la section non guidée (33) du support (6) augmente ou se réduit lors de l'enroulement et du déroulement de la partie guidée de la section (33) du support (6), dans lequel le câble d'énergie (4) débouche dans le centre d'enroulement (5) par un passage solidaire en rotation dans la réserve de câble (3).

2. Système d'alimentation en énergie selon la revendication 1, dans lequel le support est réalisé sous la forme d'au moins une enveloppe (21) du câble d'énergie (4) ou sous la forme d'au moins une chaîne (22) avec des maillons de chaîne (23) reliés par articulation entre eux.

3. Système d'alimentation en énergie selon l'une quelconque des revendications précédentes, dans lequel
- les moyens de guidage (8) du support (6) sont réalisés comme saillies (24) axiales dépassant d'au moins une partie du support (6), de préférence avec des rouleaux (25) agencés sur celles-ci, et la réserve de câble (3) présente au moins une plaque de support (26) plane et les arcs de guidage et trajets de guidage sont réalisés sous la forme d'une bande de guidage (27), de préférence sous la forme d'une rainure, dans la plaque de support (26), ou
- les moyens de guidage (8) du support (6) sont réalisés comme bande de guidage (28) sous la forme de bandes de guidage, de préférence sous la forme de rainures, dans au moins une partie du support (6) et les arcs de guidage et trajets de guidage sont réalisés sous la forme d'un agencement de saillies (29) dépassant de la plaque de support, de préférence avec des rouleaux agencés sur celles-ci.

4. Système d'alimentation en énergie selon l'une quelconque des revendications précédentes, dans lequel la section (33) non guidée du support (6) peut être enroulée et déroulée lors de l'enroulement et du déroulement de la partie guidée de la section (32) du support (6) dans des positions opposées autour du centre d'enroulement (5).

5. Système d'alimentation en énergie selon l'une quelconque des revendications précédentes, dans lequel la distance des arcs de guidage (10, 12, 14, 16, 18) les uns par rapport aux autres est sensiblement invariable.

6. Système d'alimentation en énergie selon l'une quelconque des revendications précédentes, dans lequel
- les arcs de guidage (10, 12, 14, 16, 18) présentent sensiblement un angle d'enroulement de 180 degrés et/ou
- les arcs de guidage (10, 12, 14, 16, 18) présentent des rayons de courbure différents et/ou identiques, dans lequel les arcs de guidage (10, 12, 14, 16, 18) avec différents rayons de courbure de l'ouverture (7) de la réserve de câble (3) au centre d'enroulement (5) présentent un rayon de courbure décroissant, et/ou
- le rayon de courbure respectif d'un arc de guidage (10, 12, 14, 16, 18) est constant.

7. Système d'alimentation en énergie selon l'une quelconque des revendications précédentes, dans lequel les trajets de guidage (9, 11, 13, 15, 17, 19) respectifs présentent une étendue sensiblement en ligne droite et/ou sensiblement la même étendue longitudinale.

8. Système d'alimentation en énergie selon l'une quelconque des revendications précédentes, dans lequel la réserve de câble (3) présente sensiblement une forme oblongue avec une étendue longitudinale supérieure à l'étendue transversale et les trajets de guidage (9, 11, 13, 15, 17, 19) s'étendent sensiblement le long de l'étendue longitudinale de la réserve de câble (3).

9. Système d'alimentation en énergie selon l'une quelconque des revendications précédentes, dans lequel l'enroulement et le déroulement d'au moins un support (6) sont effectués sensiblement dans un plan.

10. Système d'alimentation en énergie selon l'une quelconque des revendications précédentes, dans lequel l'entrée et la sortie d'au moins un support (6) par l'ouverture (7) sont effectuées dans une position fixe de la réserve de câble (3).

11. Système d'alimentation en énergie selon l'une quelconque des revendications précédentes, dans lequel l'au moins un support (6) présente une étendue transversale sensiblement constante.

12. Système d'alimentation en énergie selon l'une quelconque des revendications précédentes, dans lequel les arcs de guidage (10, 12, 14, 16, 18) et trajets de guidage (9, 11, 13, 15, 17, 19) présentent de l'ouverture (7) vers le centre d'enroulement (5) une étendue sensiblement en spirale et l'au moins un support (6) peut être enroulé et déroulé par sections sensiblement en spirale dans la réserve de câble (3) vers le centre d'enroulement (5).

13. Système d'alimentation en énergie selon l'une quelconque des revendications précédentes, dans lequel la position du centre d'enroulement (5) est réalisée de manière réglable dans la réserve de câble (3), dans lequel de préférence le centre d'enroulement (5) est agencé dans la réserve de câble (3) de manière déplaçable linéairement, en particulier de préférence linéairement en direction et/ou transversalement aux trajets de guidage (9, 11, 13, 15, 17, 19) .

14. Mécanisme de levage (35), en particulier grue, avec un système d'alimentation en énergie (1) selon l'une quelconque des revendications précédentes.

15. Mécanisme de levage (35) selon la revendication précédente, dans lequel le système d'alimentation en énergie (1) est fixé à une flèche (36) du mécanisme de levage (35).
